# EUROPÄISCHE PATENTANMELDUNG

(11) **EP 0 816 015 A1**
(43) Veröffentlichungstag der Anmeldung: **07.01.1998**
(21) Anmeldenummer: 97110001.1
(22) Anmeldetag: 19.06.1997
(51) Int. Cl.: B23Q 11/10, B24B 55/02

(54) **Verfahren und Vorrichtung zum Versorgen der Zusammenwirkzone zwischen einem Abrasivwerkzeug und einem Werkstück mit Kühlschmiermittel**

(30) Priorität: 25.06.1996 DE 19625286
(71) Anmelder: Kapp GmbH & Co KG, Werkzeugmaschinenfabrik, D-96450 Coburg (DE)
(72) Erfinder: Kapp, Martin A., 96450 Coburg (DE)
(74) Vertreter: Stenger, Watzke & Ring Patentanwälte

(57) **Zusammenfassung**

Die Erfindung bezieht sich auf ein Verfahren und eine Vorrichtung zum Versorgen der Zusammenwirkzone zwischen einem Abrasivwerkzeug und einem Werkstück mit Kühlschmiermittel. Es sind die Schritte vorgesehen: a) Vorsehen eines Ringspalts (4) um die Außenkontur (5) des Abrasivwerkzeugs (1) herum, wobei sich der Ringspalt (4) über große Teile des Umfangs des Abrasivwerkzeugs (1) erstreckt; b) Unterbrechung des Ringspalts (4) in einem ersten Bereich (6), in dem sich die Zusammenwirkzone (3) zwischen Abrasivwerkzeug (1) und Werkstück (2) befindet; c) Unterbrechung des Ringspalts (4) in einem zweiten Bereich (7), der sich an einem vom ersten Bereich (6) entfernten Bereich des Umfangs des Abrasivwerkzeugs (1) befindet; d) Zuführen von Kühlschmiermittel in den zweiten Bereich (7). Damit wird erreicht, daß das sich um das rotierende Abrasivwerkzeug ausbildende Luftpolster durchbrochen wird, so daß bereits geringe Ölmengenströme ausreichen, um die Wirkstelle zwischen Werkzeug und Werkstück effizient zu kühlen und zu schmieren.

## Beschreibung

Die Erfindung betrifft ein Verfahren zum Versorgen der Zusammenwirkzone zwischen einem Abrasivwerkzeug und einem Werkstück mit Kühlschmiermittel.

Desweiteren betrifft die Erfindung eine Vorrichtung zum Versorgen der Zusammenwirkzone zwischen einem Abrasivwerkzeug und einem Werkstück mit Kühlschmiermittel.

Bei spanenden Fertigungsverfahren, zu denen insbesondere auch Schleif- und ähliche Verfahren zählen, hängt die Qualität und Lebensdauer des zu fertigenden Werkstücks in erheblichem Maße davon ab, wie gut die Kühlung und Schmierung der Zusammenwirkzone zwischen Werkzeug und Werkstück während des Fertigungsprozesses erfolgt.

In der **DE 31 15 959 C2** wird eine Einrichtung an Zahnradschleifmaschinen zum Zuführen von Kühlschmiermittel zur jeweiligen Eingriffszone von Werkstück und Schleifwerkzeug beschrieben. Dort wird vom an sich bereits bekannten Schleifen im Kühlschmiermittelbad ausgegangen, wobei die Eingriffszone in dem in einem Kühlschmiermittelraum befindlichen Kühlschmiermittel eingetaucht ist.

Es zählt dort bereits zum Stand der Technik, Kühlschmiermittel auf die Bearbeitungsstelle, also z. B. auf den Eingriffsbereich von Schleifscheibe und Werkrad, zu spritzen. Wegen der insbesondere beim Schleifen zur Anwendung kommenden hohen Schleifgeschwindigkeiten ergeben sich hohe Zentrifugalbeschleunigungen am Umfang des Schleifwerkzeugs, die das selbst mit Hochdruck zugeführte Kühlschmiermittel wieder wegschleudern, so daß es nicht zur Wirkstelle gelangt. Die Folge können Schleifschäden, insbesondere Schleifbrand, sein.

Durch die **US 3,047,987** und die deutsche Zeitschrift "**Industrieanzeiger**", 93. Jahrgang, Nr. 87 vom 19. 10. 1983, ist das Schleifen im Kühlschmiermittelbad prinzipiell bekannt, wobei Schleifbrand vermieden wird und höhere Zerspanleistungen erzielbar sind.

Der DE 31 15 959 C2 liegt, ausgehend von diesem Stand der Technik, daran, derartige Verfahrensweisen so weiterzubilden, daß das Schleifen im Külschmiermittelbad möglich bleibt. Hierzu ist vorgesehen, daß der Kühlschmiermittelraum oder Wandungsteile des Kühlschmiermittelraums schwenkbar und arretierbar oder verformbar, z. B. flexibel, ausgebildet sind, oder daß je ein der Schleifscheibe und dem Werkrad zugeordneter Behälter zusammen einen Raum bilden, und sie die zum Ein- und Ausbringen der Schleifscheibe und/oder des Werkstückes und die zum Durchführen des Schleifprozesses erforderlichen Bewegungen gestatten.

Die Anwendung dieser und anderer Verfahrensweisen für die Versorgung der Wirkstelle zwischen Werkzeug und Werkstück brachte weitere Fortbildungen zutage: Es hatte sich herausgestellt, daß sich eine Erhöhung der Ölmenge pro Zeiteinheit, die der Wirkstelle zugeführt wird, positiv auswirkt. In der Folge wurden Kühlschmierstoff-Versorgungsanlagen konzipiert, die bis zu 500, in Einzelfällen sogar bis zu 800 Liter Kühlschmiermittel pro Minute der Wirkstelle zuführen. Auch der Druck, mit dem das Öl oder die Emulsion zugeführt wird, wurde erhöht, wobei Druckwerte bis zu 20 bar und mehr eingesetzt wurden.

Nachteilig beim Einsatz solcher Anlagen ist, daß sie sehr groß ausfallen und damit hohe Kosten verursachen. In diese gehen nicht nur die Anlagenkosten selber ein, sondern u. a. auch die Kosten für die Stellfläche der Anlage einschließlich Öltank und diejenigen für die Bereitstellung und Erhaltung großer Ölvolumina. Die Öltanks müssen, um eine schaumfreie Versorgung hoher Öl-Literleistungen pro Zeiteinheit möglich zu machen, bis zu 3.000 Liter Öl fassen. Dies wiederum bedingt höhere Kosten, weil spezielle Sicherheitsvorkehrungen zur Verhinderung von Umweltschäden getroffen werden müssen.

Nachteilhaft ist ferner, daß trotz Einsatzes hoher Öl-Literleistungen pro Zeiteinheit nicht immer eine zufriedenstellende Versorgung der Wirkstelle mit Kühlschmierstoff erreicht werden kann. Hier liegt die Erkenntnis zugrunde, daß sich bei einem schnell rotierenden Abrasivwerkzeug um dieses ein Luftpolster bzw. ein Luftfilm ausbreitet, der es verhindert, daß das Kühlschmiermittel in optimaler Weise an die Wirkstelle gelangt.

Der Erfindung liegt daher die **Aufgabe** zugrunde, ein Verfahren und eine Vorrichtung zu schaffen, mit der es möglich wird, Kühlschmierstoff in innigen Kontakt mit der Zusammenwirkzone zwischen Abrasivwerkzeug und Werkstück zu bringen, d. h. die Wirkstelle optimal mit Kühlschmiermittel zu versorgen. Dies soll insbesondere auch dann möglich werden, wenn hohe Arbeitsgeschwindigkeiten des Abrasivwerkzeugs zum Einsatz kommen, womit einhergeht, daß hohe Umfangsbeschleunigungen am Werkzeug vorliegen und sich ein Luftpolster um das Werkzeug ausbildet. Weiterhin soll erreicht werden, daß die benötigten Ölvolumenströme signifikant reduziert werden können, so daß wesentlich kleinere Kühlschmiermittel-Versorgungsanlagen zum Einsatz kommen können.

Die **Lösung** der Aufgabe durch die Erfindung erfolgt durch ein Verfahren zum Versorgen der Zusammenwirkzone zwischen Abrasivwerkzeug und Werkstück mit Kühlschmiermittel mit folgenden Schritten:
a) Vorsehen eines Ringspalts (4) um die Außenkontur (5) des Abrasivwerkzeugs (1) herum, wobei sich der Ringspalt (4) über große Teile des Umfangs des Abrasivwerkzeugs (1) erstreckt;
b) Unterbrechung des Ringspalts (4) in einem ersten Bereich (6), in dem sich die Zusammenwirkzone (3) zwischen Abrasivwerkzeug (1) und Werkstück (2) befindet;
c) Unterbrechung des Ringspalts (4) in einem zweiten Bereich (7), der sich an einem vom ersten Bereich (6) entfernten Bereich des Umfangs des Abrasivwerkzeugs (1) befindet;
d) Zuführen von Kühlschmiermittel in den zweiten Bereich (7).

Fortbildungsgemäß ist vorgesehen, daß sich der Ringspalt (4) quer zur Umfangsrichtung des Abrasivwerkzeugs (1) im wesentlichen äquidistant um die Außenkontur (5) des Abrasivwerkzeugs (1) erstreckt. In Umfangsrichtung des Abrasivwerkzeugs (1) erstreckt sich der Ringspalt (4) vorteilhafterweise zumindest abschnittsweise im wesentlichen äquidistant um die Außenkontur (5) des Abrasivwerkzeugs (1). Dabei kann die Dicke des Ringspalts (4) in Umfangsrichtung des Abrasivwerkzeugs (1) zumindest abschnittsweise kontinuierlich zu- oder abnehmen. Die Dicke des Ringspalts (4) ist dabei vorteilhafterweise kleiner oder gleich 10 mm, insbesondere kleiner oder gleich 1 mm.

Weiterhin ist vorgesehen, daß die Unterbrechung des Ringspalts (4) im zweiten Bereich (7) in Umfangsrichtung des Abrasivwerkzeugs (1) in einem sehr kleinen Azimutalbereich erfolgt.

Die Erfindung geht von der Erkenntnis aus, daß bereits wenig Kühlschmiermittel ausreicht, um die Wirkstelle zwischen Werkzeug und Werkstück effizient zu versorgen, wenn nur sichergestellt ist, daß das Kühlschmiermittel auch wirklich zur Wirkstelle gelangt. Der erfindungsgemäße Kerngedanke ist es daher, den sich ausbildenden Luftfilm bzw. das Luftpolster zu zerstören bzw. zu unterbrechen und dem Umfangsbereich des Abrasivwerkzeugs gezielt Kühlschmierstoff zuzuführen. Hierzu sind - wie ausgeführt - folgende zusammenwirkende Einzelmerkmale vorgesehen:
- Es wird ein enger Ringspalt vorgesehen, der sich über große Umfangsbereiche des Abrasivwerkzeugs erstreckt. Das Abrasivwerkzeug ist hierbei insbesondere von einem Gehäuse umgeben, das sich - was seine Innenseite anbelangt - eng um das Werkzeug schmiegt und lediglich einen engen im wesentlichen äquidistanten Spalt - der sich ggf. über den Umfang allmählich aufweitet, also 'konisch' ausgebildet ist - läßt, durch den Kühlschmiermittel geführt werden kann.
- Der Ringspalt wird eimal an der Stelle unterbrochen, an der die Zusammenwirkungszone des Werkzeugs mit dem Werkstück liegt. D. h. das Werkzeug tritt in einem ersten Bereich aus dem Gehäuse aus, und zwar nahe bei der oder an der Arbeitsstelle.
- Weiterhin ist eine zweite Unterbrechung des Ringspalts vorgesehen, die an einer anderen Stelle als der Zusammenwirkstelle Werkzeug - Werkstück liegt. An dieser Stelle wird das Kühlschmiermittel in den Ringspalt eingeleitet; es wird - durch die Rotationsbewegung des Werkzeugs - durch den Ringspalt geleitet und gelangt gezielt zur Wirkstelle.
- Der Ringspalt ist ggf. den fluidmechanischen Bedürfnissen insofern angepaßt, als daß er in den Bereichen, in denen kein Kühlschmierstoff gefördert werden muß, enger ausgebildet ist als in anderen Bereichen; er ist also über den Umfang nicht notwendigerweise immer gleich groß.

Dadurch, daß die Unterbrechung des Ringspalts in diesem zweiten Bereich, also an der Zuführstelle des Kühlschmiermittels, in einem sehr kleinen Umfangs-Azimutalbereich, also schlagartig bzw. plötzlich, erfolgt, ergibt sich aufgrund der fluiddynamischen Verhältnisse, daß sich im zweiten Bereich ein Unterdruck einstellt, der das Kühlschmiermittel in den Ringspalt 'hineinsaugt'. Damit ist sichergestellt, daß der Ringspalt als zuverlässiger Transportweg für das Kühlschmiermittel fungieren kann. Das Öl wird somit automatisch zur Wirkstelle transportiert, ohne daß es hoher Mengen davon bedarf. Versuche haben ergeben, daß sich durch das erfindungsgemäße Verfahren die benötigte Menge Kühlschmiermittel pro Zeiteinheit um den Faktor 10 und mehr der sonst üblichen Menge reduzieren läßt. Trotz des nunmehr relativ geringen Volumenstroms Kühlschmiermittel ist damit trotzdem sichergestellt, daß kein Schleifbrand entstehen kann bzw. daß das Grenzzeitspanvolumen der Schleifscheibe nicht absinkt.

Bei bekannten Verfahren und Vorrichtungen wurde das Öl stets durch eine - separate - Zuführungvorrichtung an die Wirkstelle transportiert. Im Unterschied hierzu wird erfindungsgemäß erreicht, daß das Öl durch das Werkzeug selber zur Wirkstelle gelangt.

Die Vorrichtung zum Versorgen der Zusammenwirkzone zwischen dem Abrasivwerkzeug und dem Werkstück mit Kühlschmiermittel weist auf:
- ein rotierendes Abrasivwerkzeug (1), das zeitweise im Eingriff mit einem Werkstück (2) steht,
- eine Abdeckung (8) des Abrasivwerkzeugs (1) und
- eine Zuführungsvorrichtung (9) für das Zuführen von Kühlschmiermittel,

Diese Vorrichtung ist erfindungsgemäß dadurch gekennzeichnet,
- daß das Abrasivwerkzeug (1) und die Abdeckung (8) einen Ringspalt (4) bilden, der sich um die Außenkontur (5) des Abrasivwerkzeugs (1) herum und über große Teile des Umfangs des Abrasivwerkzeugs (1) erstreckt,
- daß der Ringspalt (4) in einem ersten Bereich (5), in dem sich die Zusammenwirkzone (3) zwischen Abrasivwerkzeug (1) und Werkstück (2) befindet, unterbrochen ist, und
- daß der Ringspalt (4) in einem zweiten Bereich (6), der sich an einem vom ersten Bereich (5) entfernten Bereich des Umfangs des Abrasivwerkzeugs (1) befindet, unterbrochen ist,
wobei das Kühlschmiermittel im zweiten Bereich (6) zugeführt wird.

Auch hier ist wieder vorgesehen, daß sich der Ringspalt (4) quer zur Umfangsrichtung des Abrasivwerkzeugs (1) im wesentlichen äquidistant um die Außenkontur (5) des Abrasivwerkzeugs (1) erstreckt. In Umfangsrichtung des Abrasivwerkzeugs (1) erstreckt sich der Ringspalt (4) zumindest abschnittsweise im wesentlichen äquidistant um die Außenkontur (5) des Abrasivwerkzeugs (1). Dabei kann die Dicke des Ringspalts (4) in Umfangsrichtung des Abrasivwerkzeugs (1) zumindest abschnittsweise kontinuierlich zu- oder abnehmen. Die Dicke des Ringspalts (4) ist dabei vorteilhafterweise kleiner oder gleich 10 mm, insbesondere kleiner oder gleich 1 mm ist.

Günstig wirkt sich aus, wenn die Unterbrechung des Ringspalts (4) im zweiten Bereich (7) in Umfangsrichtung des Abrasivwerkzeugs (1) in einem sehr kleinen Azimutalbereich, also über den Umfang plötzlich bzw. schlagartig, erfolgt.

Vorteilhafte Weiterbildungen sind:

Das Abrasivwerkzeug (1) ist ein Schleifwerkzeug, insbesondere ein Profilschleifwerkzeug. Das Profil dieses Profilschleifwerkzeug entspricht im wesentlichen der Kontur des zu schleifenden Profils des Werkstücks. Vorteilhafterweise ist das Schleifwerkzeug ein Verzahnungsschleifwerkzeug, wobei das Profil des Verzahnungsschleifwerkzeug im wesentlichen der Kontur der zu schleifenden Lücke eines Zahnrades entspricht. Die profilierte Schleifscheibe erzeugt demgemäß beim Schleifen die gewünschte Zahnlücke.

Das Abrasivwerkzeug (1) kann ein mit einer Abrasivschicht beschichteter Stahlkörper sein, es kann aber auch ein abrichtbares Schleifwerkzeug sein.

Alternativ kann das Abrasivwerkzeug auch eine Flex-Scheibe sein.

Als Kühlschmiermittel kann Öl, Emulsion oder auch Preßluft zum Einsatz kommen.

Besondere Bedeutung kommt der Zuleitung des durch den Ringspalt geförderten Kühlschmiermittels zur Wirkstelle zu. Gemäß einer Weiterbildung ist daher vorgesehen, daß im ersten Bereich (6) der Zusammenwirkzone zwischen Abrasivwerkzeug (1) und Werkstück (2), in dem der Ringspalt (4) unterbrochen ist, Mittel (10) angeordnet sind, die das Kühlschmiermittel auf die Zusammenwirkzone (3) leiten. Dies geschieht vorteilhafterweise - beim Profilschleifen - dadurch, daß die Mittel (10) zum Leiten des Kühlschmiermittels im Falle des Schleifens von Zahnrädern oder Werkstücken mit anderen zu bearbeitenden Profilen (z. B. Schraubenverdichterrotoren) der Kontur des zu schleifenden Profils des Werkstücks (2) angepaßt sind.

In der Zeichnung ist ein erfindungsgemäßes Ausführungsbeispiel dargestellt:
- Fig. 1: zeigt schematisch einen Schnitt durch eine erfindungsgemäße Vorrichtung zur Zuführung von Kühlschmiermittel, in
- Fig. 2: ist schematisch ein Teilausschnitt von Abrasivwerkzeug und umgebender Abdeckung gemäß dem Schnitt A - B gezeigt,
- Fig. 3: stellt einen Teilausschnitt von Abrasivwerkzeug und Werkstück gemäß Schnitt C - D dar,
- Fig. 4: zeigt denselben Schnitt wie Fig. 3, jedoch mit weggenommenem Werkzeug, und
- Fig. 5: stellt schematisch den Geschwindigkeitsverlauf im Ringspalt für den äußersten Bereich des Abrasivwerkzeugs dar.

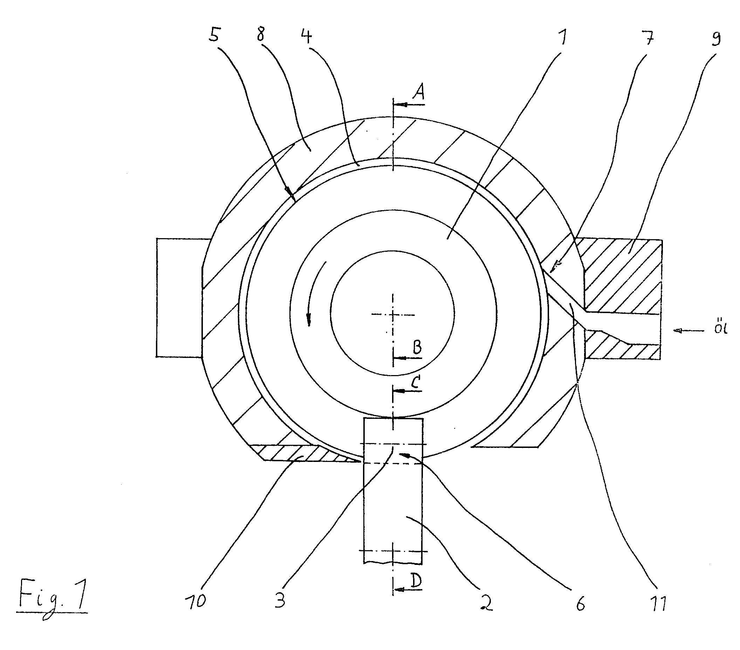

Fig. 1 zeigt schematisch die Seitenansicht eines Abrasivwerkzeugs 1, das - s. Pfeilrichtung - um seine Drehachse rotiert. Bei dem Abrasivwerkzeug 1 handelt es sich um eine Schleifscheibe, die zum Schleifen eines Zahnrades 2 dient. Dabei kommt der sog. Vollformschliff (oder auch der Ein- bzw. Zweiflankenschliff) zum Einsatz, d. h. das Profil der Schleifscheibe 1 entspricht demjenigen der Zahnlücke, so daß vorzugsweise zwei benachbarte Zahnflanken und ggf. auch der dazwischenliegende Zahnfuß geschliffen werden. Das Abrasivwerkzeug 1 erzeugt also beim Bearbeitungsvorgang das gewünschte Profil der Zahnlücke. Es sei angemerkt, daß das erfindungsgemäße Verfahren jedoch keinesfalls auf diese Art der Bearbeitung beschränkt ist, sondern daß vielmehr jegliche Bearbeitung mit geometrisch unbestimmter Schneide und auch manches Verfahren mit geometrisch bestimmter Schneide unter Nutzung der erfindungsgemäßen Lehre ausgeführt werden können.

Schleifscheibe 1 und Werkstück 2 stehen während des Bearbeitungsvorganges in der Zusammenwirkzone 3 in Verbindung. An dieser Stelle muß für eine ordnungsgemäße Bearbeitung eine genügend große Menge Kühlschmiermittel zur Verfügung stehen, um die Wärme, die während der Bearbeitung entsteht, abzuführen und die zerspanten (Mikro-)Partikel aus der Zusammenwirkzone abzutransportieren.

Im vorliegenden Fall wird das Kühlschmiermittel, beispielsweise in Form von Öl, einer Zuführvorrichtung für die Zuführung von Kühlschmiermittel 9 eingegeben (s. Pfeil 'Öl'). Die Zuführvorrichtung 9 ist mit der Abdeckung 8 verbunden. Das Öl gelangt über eine Bohrung 11 in der Abdeckung 8 zu einem Ringspalt 4, der sich zwischen dem Abrasivwerkzeug 1 und dem Gehäuse 8 ausbildet.

Die Zusammenwirkstelle 3 (erster Bereich 6) zwischen Werkzeug und Werkstück, also der Ort, an dem das Kühlschmiermittel benötigt wird, liegt entfernt von dem Ort, an dem das Kühlschmiermittel eingeleitet wird (zweiter Bereich 7). Dies unterscheidet die erfindungsgemäße Ausgestaltung von den sonst üblichen Vorrichtungen.

Im vorliegenden Fall liegen ca. 270 ° Umfang der Schleifscheibe zwischen Einleitungsstelle des Öls und der Schleifstelle. Erfindungsgemäß ist vorgesehen, daß das Öl im Ringspalt 4 in Bewegungsrichtung der Schleifscheibe fließt, bis es an die Wirkstelle gelangt. Der Winkelweg, über den Öl im Ringspalt 4 geführt wird, ist vorteilhafterweise größer als 90 °. Damit ist sichergestellt, daß es zu einem innigen Kontakt zwischen Kühlschmiermittel und Schleifscheiben-Wirkfläche kommt. Der sich normalerweise ausbildende Luftfilm (Luftpolster) auf der Schleifscheibe wird damit zuverlässig durchbrochen.

Besonders vorteilhaft arbeitet die erläuterte Vorrichtung, wenn die Einleitungsstelle 7 für das Öl derart ausgebildet ist, daß sich ein großer Sprung in den Querschnitten ergibt ('schlagartige' bzw. plötzliche Unterbrechung des Ringspalts 4). Dies kann z. B. dadurch erreicht werden, daß die Öl-Zuführbohrung 11 möglichst radial, d. h. unter einem großen Winkel, in den Ringspalt 4 eintritt. Aufgrund der hydrodynamischen Gesetzmäßigkeiten ergibt sich bei relativ hoher Umfangsgeschwindigkeit der Schleifscheibe und damit hoher Ölfließgeschwindigkeit im Ringspalt 4 und bei relativ niedriger Fließgeschwindigkeit in der Bohrung 11 (bei genügend großem Bohrungsdurchmesser) ein 'Saugeffekt' hinein in den Ringspalt 4, so daß das Öl auf die Wirkoberfläche der Schleifscheibe zubeschleunigt wird und so inniger Kontakt des Öls mit diesem Bereich hergestellt wird.

In Fig. 1 erstreckt sich der Ringspalt 4 fast über den gesamten Umfang des Abrasivwerkzeugs 1 in konstanter Weise; d. h. der Ringspalt 4 ist äquidistant über den Umfang des Werkzeugs 1 ausgebildet. Dies ist hier aus Gründen der Übersichtlichkeit so dargestellt, muß jedoch nicht notwendigerweise so. Es kann vielmehr auch sinnvoll sein, daß der Ringspalt 4 zwischen dem zweiten Bereich (Eintritt Kühlschmiermittel) 7 und dem rechten, unteren Ende der Abdeckung 8 kleiner als im restlichen Bereich der Abdeckung 8 ausgebildet ist, da in diesem Bereich kein Kühlschmiermittel gefördert werden muß. In der Figur ist diesr Bereich genauso groß dargestellt, wie im übrigen Verlauf des Ringspalts 4. Ferner kann es ebenfalls sinnvoll sein, daß - auch dieser Fall ist nicht dargestellt - sich der Ringspalt 4, wenngleich er im wesentlichen äquidistant um den Umfang des Abrasivwerkzeugs 1 verläuft, allmählich vergrößert oder verkleinert, daß er also 'konisch' ausgebildet ist. Der Ringspalt 4 muß also nicht unbedingt über den gesamten Verlauf der Abdeckung gleich groß sein.

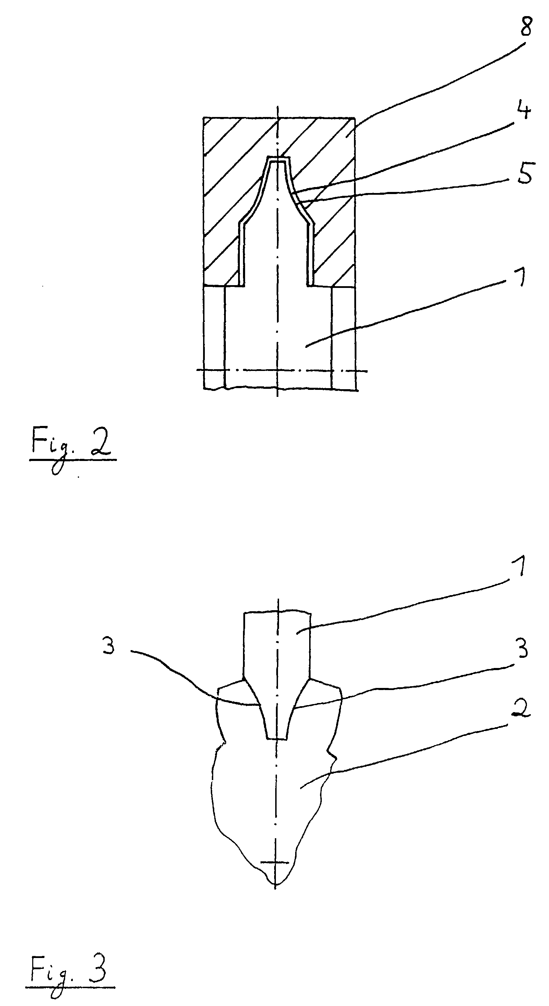

In Fig. 2 ist ein Schnitt entlang der Linie A - B, s. Fig. 1, skizziert. Man erkennt, daß das Schleifwerkzeug 1 von der Abdeckung bzw. vom Gehäuse 8 umfaßt wird. Wie zu sehen ist, ist die Abdeckung dabei so ausgeführt, daß sich ein Ringspalt 4 ergibt, der eine gleiche Dicke über das Wirkprofil des Werkzeugs 1 hat, d. h. der Ringspalt ist äquidistant, der senkrechte Abstand zwischen der Außenkontur 5 der Schleifscheibe und der Innenkontur der Abdeckung 8 ist über einen gewünschten Bereich gleich. Es hat sich als vorteilhaft herausgestellt, wenn eine Äquidistante, also eine Breite des Ringspaltes 4, von 1 Millimeter eingesetzt wird.

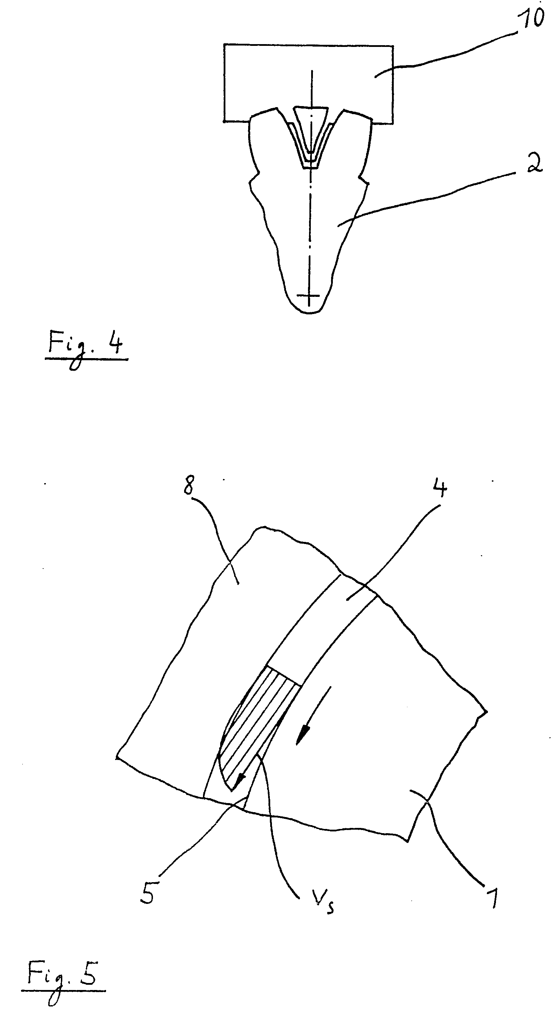

In Fig. 3 ist ein Schnitt entlang der Linie C - D, s. Fig. 1, zu sehen. Man sieht die Wirkungsweise des Verfahrens des Profil-Zahnradschleifens. Das Schleifwerkzeug 1 ist in diesem Beispiel - von seinem Wirkprofil her gesehen - genau so ausgebildet, daß eine Zahnlücke, also zwei benachbarte Zahnflanken und evtl. der dazwischenliegende Zahnfuß, geschliffen werden. Damit ergibt sich die Zusammenwirkzone 3 zwischen Werkzeug 1 und Zahnrad 2.

Wichtig ist ebenfalls das Vorsehen und die Ausbildung eines Leitmittels 10 für das Kühlschmiermittel, um es in optimaler Weise an die Zusammenwirkzone zu führen, s. Fig. 4. Hier ist derselbe Schnitt wir in Fig. 3 zu sehen, jedoch wurde das Werkzeug 1 weggenommen. Es ist vorgesehen, daß die Leitmittel 10 der Form bzw. dem Profil der Schleifscheibe bzw. derjenigen der zu schleifenden Zahnlücke angepaßt ist. Die sich im vorliegenden Fall ergebende Form der Zahnlücke des Zahnrades 2 wird auf diese Weise optimal mit Kühlschmiermittel versorgt.

In Fig. 5 ist schließlich der Geschwindigkeitsverlauf im Ringspalt 4 für den äußersten Bereich des Abrasivwerkzeugs zu sehen. Entsprechende Geschwindigkeitsverläufe ergeben sich für den gesamten Ringspalt-Bereich für die Außenkontur 5 des Werkzeugs 1. Die Schleifgeschwindigkeit vₛ, üblicherweise ca. 40 m/s, liegt an der Schleifscheibe selber vor und bestimmt damit die Geschwindigkeit am einen Ende des Ringspalts 4. Am Gehäuse 8 herrscht hingegen Geschwindigkeit Null, so daß sich das gezeigte Geschwindigkeitsprofil im Ringspalt 4 ergibt.

Nicht dargestellt, jedoch genauso anwendbar ist die erfindungsgemäße Lehre, wenn keine Einzelscheiben, sondern z. B. Schleifscheibensätze verwendet werden. In gewissem Umfang kann die beschriebene Vorrichtung auch für Schleifschnecken eingesetzt werden. Grundsätzlich eignet sich die beschriebene Technologie für alle abrasiven Verfahren, wie Schleifen, Honen, etc.

### Bezugszeichenliste:

- 1: Abrasivwerkzeug
- 2: Werkstück
- 3: Zusammenwirkzone
- 4: Ringspalt
- 5: Außenkontur des Abrasivwerkzeugs
- 6: erster Bereich (Zusammenwirkzone)
- 7: zweiter Bereich (Eintritt Kühlschmiermittel)
- 8: Abdeckung des Abrasivwerkzeugs
- 9: Zuführvorrichtung für das Zuführen von Kühlschmiermittel
- 10: Leitmittel für das Kühlschmiermittel
- 11: Bohrung
- vₛ: Schleifgeschwindigkeit

## Patentansprüche

1. Verfahren zum Versorgen der Zusammenwirkzone (3) zwischen einem rotierenden Abrasivwerkzeug (1) und einem Werkstück (2) mit Kühlschmiermittel, das die Schritte aufweist:
a) Vorsehen eines Ringspalts (4) um die Außenkontur (5) des Abrasivwerkzeugs (1) herum, wobei sich der Ringspalt (4) über große Teile des Umfangs des Abrasivwerkzeugs (1) erstreckt;
b) Unterbrechung des Ringspalts (4) in einem ersten Bereich (6), in dem sich die Zusammenwirkzone (3) zwischen Abrasivwerkzeug (1) und Werkstück (2) befindet;
c) Unterbrechung des Ringspalts (4) in einem zweiten Bereich (7), der sich an einem vom ersten Bereich (6) entfernten Bereich des Umfangs des Abrasivwerkzeugs (1) befindet;
d) Zuführen von Kühlschmiermittel in den zweiten Bereich (7).

2. Verfahren nach Anspruch 1, dadurch gekennzeichnet, daß sich der Ringspalt (4) quer zur Umfangsrichtung des Abrasivwerkzeugs (1) im wesentlichen äquidistant um die Außenkontur (5) des Abrasivwerkzeugs (1) erstreckt.

3. Verfahren nach Anspruch 1 oder 2, dadurch gekennzeichnet, daß sich der Ringspalt (4) in Umfangsrichtung des Abrasivwerkzeugs (1) zumindest abschnittsweise im wesentlichen äquidistant um die Außenkontur (5) des Abrasivwerkzeugs (1) erstreckt.

4. Verfahren nach einem der Ansprüche 1 bis 3, dadurch gekennzeichnet, daß die Dicke des Ringspalts (4) in Umfangsrichtung des Abrasivwerkzeugs (1) zumindest abschnittsweise kontinuierlich zu- oder abnimmt.

5. Verfahren nach einem der Ansprüche 1 bis 4, dadurch gekennzeichnet, daß die Dicke des Ringspalts (4) kleiner oder gleich 10 mm ist.

6. Verfahren nach Anspruch 5, dadurch gekennzeichnet, daß die Dicke des Ringspalts (4) kleiner oder gleich 1 mm ist.

7. Verfahren nach einem der vorangegangenen Ansprüchen, dadurch gekennzeichnet, daß die Unterbrechung des Ringspalts (4) im zweiten Bereich (7) in Umfangsrichtung des Abrasivwerkzeugs (1) in einem sehr kleinen Azimutalbereich erfolgt.

8. Vorrichtung zum Versorgen der Zusammenwirkzone (3) zwischen einem Abrasivwerkzeug (1) und einem Werkstück (2) mit Kühlschmiermittel, die aufweist:
- ein rotierendes Abrasivwerkzeug (1), das zeitweise im Eingriff mit einem Werkstück (2) steht,
- eine Abdeckung (8) des Abrasivwerkzeugs (1) und
- eine Zuführungsvorrichtung (9) für das Zuführen von Kühlschmiermittel,
**dadurch gekennzeichnet,**
- daß das Abrasivwerkzeug (1) und die Abdeckung (8) einen Ringspalt (4) bilden, der sich um die Außenkontur (5) des Abrasivwerkzeugs (1) herum und über große Teile des Umfangs des Abrasivwerkzeugs (1) erstreckt,
- daß der Ringspalt (4) in einem ersten Bereich (5), in dem sich die Zusammenwirkzone (3) zwischen Abrasivwerkzeug (1) und Werkstück (2) befindet, unterbrochen ist, und
- daß der Ringspalt (4) in einem zweiten Bereich (6), der sich an einem vom ersten Bereich (5) entfernten Bereich des Umfangs des Abrasivwerkzeugs (1) befindet, unterbrochen ist,
wobei das Kühlschmiermittel im zweiten Bereich (6) zugeführt wird.

9. Vorrichtung nach Anspruch 8, dadurch gekennzeichnet, daß sich der Ringspalt (4) quer zur Umfangsrichtung des Abrasivwerkzeugs (1) im wesentlichen äquidistant um die Außenkontur (5) des Abrasivwerkzeugs (1) erstreckt.

10. Vorrichtung nach Anspruch 8 oder 9, dadurch gekennzeichnet, daß sich der Ringspalt (4) in Umfangsrichtung des Abrasivwerkzeugs (1) zumindest abschnittsweise im wesentlichen äquidistant um die Außenkontur (5) des Abrasivwerkzeugs (1) erstreckt.

11. Vorrichtung nach einem der Ansprüche 8 bis 10, dadurch gekennzeichnet, daß die Dicke des Ringspalts (4) in Umfangsrichtung des Abrasivwerkzeugs (1) zumindest abschnittsweise kontinuierlich zu- oder abnimmt.

12. Vorrichtung nach einem der Ansprüche 8 bis 11, dadurch gekennzeichnet, daß die Dicke des Ringspalts (4) kleiner oder gleich 10 mm ist.

13. Vorrichtung nach Anspruch 12, dadurch gekennzeichnet, daß die Dicke des Ringspalts (4) kleiner oder gleich 1 mm ist.

14. Vorrichtung nach einem der Ansprüche 8 bis 13, dadurch gekennzeichnet, daß die Unterbrechung des Ringspalts (4) im zweiten Bereich (7) in Umfangsrichtung des Abrasivwerkzeugs (1) in einem sehr kleinen Azimutalbereich erfolgt.

15. Vorrichtung nach einem der Ansprüche 8 bis 14, dadurch gekennzeichnet, daß das Abrasivwerkzeug (1) ein Schleifwerkzeug ist.

16. Vorrichtung nach Anspruch 15, dadurch gekennzeichnet, daß das Schleifwerkzeug ein Profilschleifwerkzeug ist.

17. Vorrichtung nach Anspruch 16, dadurch gekennzeichnet, daß das Profil des Profilwerkzeug im wesentlichen der Kontur des zu schleifenden Profils entspricht.

18. Vorrichtung nach Anspruch 15, 16 oder 17, dadurch gekennzeichnet, daß das Schleifwerkzeug ein Verzahnungsschleifwerkzeug ist.

19. Vorrichtung nach einem der Ansprüche 15 bis 18, dadurch gekennzeichnet, daß das Profil des Verzahnungsschleifwerkzeug im wesentlichen der Kontur der zu schleifenden Lücke eines Zahnrades entspricht.

20. Vorrichtung nach einem der Ansprüche 8 bis 19, dadurch gekennzeichnet, daß das Abrasivwerkzeug (1) ein mit einer Abrasivschicht beschichteter Stahlkörper ist.

21. Vorrichtung nach einem der Ansprüche 8 bis 19, dadurch gekennzeichnet, daß das Abrasivwerkzeug (1) ein abrichtbares Schleifwerkzeug ist.

22. Vorrichtung nach einem der Ansprüche 8 bis 14, dadurch gekennzeichnet, daß das Abrasivwerkzeug (1) eine Flex-Scheibe ist.

23. Vorrichtung nach einem der Ansprüche 8 bis 22, dadurch gekennzeichnet, daß das Kühlschmiermittel Öl oder eine Emulsion ist.

24. Vorrichtung nach einem der Ansprüche 8 bis 22, dadurch gekennzeichnet, daß das Kühlschmiermittel Luft ist.

25. Vorrichtung nach einem der Ansprüche 8 bis 24, dadurch gekennzeichnet, daß im ersten Bereich (6) der Zusammenwirkzone zwischen Abrasivwerkzeug (1) und Werkstück (2), in dem der Ringspalt (4) unterbrochen ist, Mittel (10) angeordnet sind, die das Kühlschmiermittel auf die Zusammenwirkzone (3) leiten.

26. Vorrichtung nach Anspruch 25, dadurch gekennzeichnet, daß die Mittel (10) zum Leiten des Kühlschmiermittels im Falle des Schleifens von Zahnrädern oder Werkstücken mit anderen zu bearbeitenden Profilen der Kontur des zu schleifenden Profils des Werkstücks (2) angepaßt sind.
